# EUROPEAN PATENT APPLICATION

(11) **EP 1 688 841 A1**
(43) Date of publication of application: **09.08.2006**
(21) Application number: 05007882.3
(22) Date of filing: 11.04.2005
(51) Int. Cl.: G06F 9/46

(54) **Dynamic parallel processing**

(30) Priority: 04.02.2005 EP 05002447
(71) Applicant: SAP AG, 69190 Walldorf (DE)
(72) Inventor: Greven, Boris, 69469 Weinheim (DE); Westendorf, Frank, 76698 Ubstadt-Weiher (DE)
(74) Representative: Hössle Kudlek & Partner

(57) **Abstract**

The present invention refers to a method for dynamic parallel processing of a plurality of subprocesses of a process initiated by means of a parallel processing framework, each of the plurality of subprocesses including processing of one or more data objects in a computer system comprising a plurality of servers (AP1, ..., APn) for processing the plurality of data objects by the plurality of subprocesses; the method comprising the following steps:
- building work packages (WP1, ..., WPn) from the plurality of data objects according to a process specific scheme, and
- dynamically distributing the work packages of the plurality of data objects among the plurality of servers (AP1, ..., APn) according to a process specific execution order.

The present invention further refers to an appropriate computer system and a framework for dynamic parallel processing of a plurality of subprocesses of a process, each of the plurality of subprocesses including processing of one or more data objects.

## Description

### Field of the Invention

The present invention relates to the field of parallelizing processes on the basis of a plurality of data objects included by a process. Particularly, the present invention relates to a computer system and a computer implemented method and framework for parallel processing of a plurality of subprocesses of a process, each of the plurality of subprocesses including processing of one or more data objects. The invention further relates to a computer program product with a computer-readable medium and a computer program stored on the computer-readable medium with a program code which is suitable for carrying out such a method when the computer program is run on a computer.

### Description of the Related Art

There are many time critical processes which have to be processed in a very narrow time range. Those processes can be found for example in the field of commission payments, for example remuneration payments to employees or agents within a framework of a compensation plan.

Generally, in systems processes are parallelized manually. There exists tools to configure processes to be run in parallel but the dispatching for every subprocess must be done manually. Generally, parallelization of processes is already known. Regarding a system which uses the client/server technology and provides an ability to store, retrieve, analyse, and process in many ways corporate data for financial analysis, production operation, human source management, and most other business processes, there are already several transactions which are available for the parallelization of processes. These are for example the job definition, simple job choice, and extended job choice. When generating a job, it is possible to influence several parameters or factors. It is possible to fix the temporal starting conditions and periodicity, the priority, the processing aim for a special job can be stated, a spool list and a spool receiver can be generated and several steps of a job can be influenced. Furthermore, a wizard exists which facilitates the generation of jobs.

Actually, it is not possible to influence individual or process specific parameters. Jobs cannot be chosen specifically by process. Furthermore, load distribution cannot be done dynamically among several servers but has to be explicitly stated statically for each job. Job definition can only be done manually for each job with the help of variants. Furthermore, the time needed is not really optimised or minimised.

A further technology which is actually known for parallelization of processes is a so-called grid technology. The grid technology describes how resources are switched on and off depending on the system load. The grid technology represents a balancing of resources depending on a system load.

It would be desirable to provide a system and a method to parallelize a process by parallel processing a plurality of subprocesses of that process in a flexible manner by using available resources in an optimal way. Furthermore, it would be advantageous to provide the possibility of dynamically distributing a certain workload among a plurality of servers within a certain system.

### Summary of the Invention

Therefore, the present invention proposes a computer implemented method with the features of claim 1, a computer system with the features of claim 12, a computer program with the features of claim 21, a computer program product with the features of claim 23 and a computer implemented framework with the features of claim 24.

Within the context of this specification, the term process broadly refers to any process operating on any type of data object, e.g. booking (process) on an account (data object), payment (process) in a commission agreement (data object) and the like. The parallelization may be implemented e.g. by generating work packages of data objects and sending them to the servers for being operated by a specific process. A process can thus be split up in a plurality of subprocesses.

Accordingly, the invention provides a method for dynamic parallel processing of a plurality of subprocesses of a process initiated by means of a parallel processing framework. Each of the plurality of subprocesses includes processing of one or more data objects in a computer system, wherein the computer system comprises a plurality of servers, each having at least one processor for processing the plurality of data objects by the plurality of subprocesses. The method comprises at least the step of building work packages from the plurality of data objects according to a process specific scheme and the step of dynamically distributing the work packages of the plurality of data objects among the plurality of servers according to a process specific execution order.

It is possible that the scheme is defined by means of the framework, such that the work packages can be executed in a semantically arbitrary order. Furthermore, the execution order may be defined by means of the framework.

One possibility to establish the scheme for building the work packages is to put data objects which share certain predefined items or certain predefined properties in the same work package. The process to be parallelized can be for example an accounting of commission contracts of a number of customers. In this case a contract corresponds to a data object. There could be thousands of such data objects. A possible rule given by the user by means of the framework for building work packages could be to assign all contracts of a certain customer to one and the same work package. Since the customers will have a different number of contracts the work packages will have different sizes.

During processing of a work package the data objects of the work package being processed can be blocked. Moreover, a whole branch of data objects with same properties can be blocked when one of those data objects is about to be processed. As an example, while executing a single commission contract of a certain customer, all contracts of this certain customer may be blocked for any parallel execution. This blocking is common practice in handling such processes. As a result, if already one data object is being processed by a first server all further data objects belonging to the same branch of data objects are blocked and therefore, cannot be processed by any other server. Accordingly, a second server which intends to do the processing on one of these data objects has to wait till the blocking ceases, resulting in a waste of computing time. Therefore, it is highly advantageous to perform a segmentation of the workload on the level where a blocking occurs. As an example, when considering the accounting of commission contracts, it is quite conceivable that a blocking rule within the data system states that every data object of a certain customer is blocked while a single data object of this customer is handled. Then it would be advantageous to effect the building of the work packages with respect to the identity of the customers. With such a building rule it is impossible that, while a specific server computes the work package regarding customer A, any other work package processed by any other server contains data objects relating to customer A.

The claimed method can be performed by a computer system comprising a computing unit which can be directly accessed by any client, and an adapter unit interconnecting the computing unit and the plurality of servers. In addition each server may contain a certain number of processors, i.e. CPUs. The computing unit can be arranged to put the parallel processing framework at the user's disposal in which the user defines a process specific scheme according to which the adapter unit automatically builds work packages of the plurality of data objects. The work packages are built such that they can be executed in a semantically arbitrary order. Furthermore, the parallel processing framework enables the user to define a process specific order according to which the work packages of the plurality of data objects are distributed dynamically among the plurality of servers. The framework can contain specialized services and tools, which reduce the knowledge the user needs to start a specific process. The framework may include all of the details required to start and control a process. It is possible that the framework represents a kind of template containing a sequenced set of all segments which relate to a functional business area or to a multifunctional business area and applying to all processes defined for that area or areas. Furthermore, the framework can allow its functionality to be extended by writing plug-in modules, so-called framework extensions or functional modules. Thus, the framework provides a structured collection of software building blocks that can be used to develop components, assemble them into a specific process and finally run the process.

Additionally, this can be done in a user friendly environment which shows for example a graphical representation of the partition of the workload in work packages and the distribution of those work packages among the plurality of servers on an appropriate display. Preferably, this can be done at any time during processing.

In a further embodiment of the method according to the present invention, the execution order of the work packages is arranged in such a way that the time of a processor being idle until the plurality of servers has completed the workload is minimized. For this, it is necessary to calculate and to adjust the size of a work package. In order to calculate the size of a work package, the adapter unit combines a certain number of data objects in a block. A certain number of blocks forms a work package. The number of blocks multiplied with the size of each block gives the size of the work package. The workload is estimated by multiplying the sum of the work packages with the average size of a work package. With this estimation of the total workload it is possible to calculate during execution how much time is left till the end of the execution. It is possible to keep track of computed work packages. Comparing the number of already computed work packages with the total workload enables a user to infer the remaining processing time. With respect to the possibility that the work packages are sized differently, the work packages can be distributed among the servers in such an execution order that the overall workload to be executed by each server is approximately balanced.

While the mentioned grid technology represents a balancing of resources depending on the system load, the method according to the present invention considers the available resources at present. The method of the present invention does not switch additional resources on or off, but rather uses the current activated capacity within the system in an optimal way.

The main difference to manual parallelization is the dynamic aspect of the method according to the present invention. This dynamic aspect allows automatic control by the adapter unit of subprocesses to be run on different servers. The several work packages built by the adapter unit are distributed among the presently available servers. As soon as one work package is finished on one of the servers, a successive work package can be started immediately. Therefore, the complete workload, segmented in the plurality of work packages, is going to be distributed dynamically to several subprocesses in ordered work packages. The ordering of the work packages can be done according to a process specific execution order predefined by the user by means of the framework. With the help of such an individual adaptation of a certain process a further optimization, using the execution order of the work packages, can be reached which affects the runtime in a positive way. With help of the method according to the present invention a better utilisation of available system resources or servers, respectively, can be realised. With help of a process specific execution order of the built work packages an additional acceleration of processes can be reached and the processing time of the server with the largest processing time will be minimized. Furthermore, fine granularity of the distributed work packages to sub-processors is possible. With the help of the method according to the present invention it is possible to process time critical processes within hours of low user load within a system with minimal process time. Thus, it is possible with the help of the method according to the present invention to handle processes which have to be done very quickly in times of low use of the system capacity, as, for example, at night. Therefore, those processes can be accelerated as much as possible to be done before system load arises again.

In the already mentioned example of accounting commission contracts the entirety of all contracts represents the workload. The work packages can be built such that each work package comprises all contracts referring to a certain customer, respectively. In order to minimize the running time of the whole process it is advantageous to arrange the work packages according to size in a list, thus defining a process specific execution order. The work packages are distributed among the plurality of servers by sending the largest work packages to the available servers first. As soon as one server has finished his work package, then, the following work package in the list is sent to that server. In this manner all work packages are processed step by step. The whole process can be shown on a display provided by the parallel processing framework running on the computing unit so that the user can count and check which work packages are already done, which are currently processed on the servers, and which have still to be sent to the servers. In addition the user is enabled to estimate the remaining running time of the process.

In another embodiment of the claimed method, it could be advantageous for the user to determine as a rule for the ordering of the work packages that the work package comprising the contracts relating to a certain customer, are chronologically processed with respect to the different customers. The user can feed such a hierarchical execution order into the parallel processing framework. Then, the adapter unit will order the work packages according to this rule. The user has to possess some knowledge about the content of the workload in order to form rules according to which the work packages are generated by the adapter unit and in order to find an advantageous execution order of the work packages. It is possible that the user has to find these rules by try and error.

The work packages are firstly distributed among the servers such that each available server firstly executes one work package. The work packages can be distributed among the servers of the server group up to the point of no further resources being available. As soon as one background process returns as for example in form of a so-called COMMIT, the next work package can be sent to the server. COMMIT control is a function that ensures data integrity. COMMIT control allows to process blocks in a work package such that no information is lost due to e.g. restart of the whole process or e.g. restart of a single server. COMMIT control keeps track of a work package from the time of being sent to a server until such time as the work package is processed and returned back from the server. If anything happens during the processing of this work package resulting in a failure, COMMIT control identifies the erroneous work package and reacts accordingly, e.g. by sending the relevant work package once again to the server. The block processing prevents an overflow of internal tables and allows each work package to perform such information via a required COMMIT on the respective server. Therefore, a so-called COMMIT control can prevent such an overflow which otherwise can happen.

According to a further embodiment of the method according to the present invention, each work package is processed on a server via an asynchronous so-called remote function call (aRFC). The number of parallel running subprocesses depends on the configuration and the current load of the system. Normally, it can be significantly higher than the number of parallel jobs which have been distributed manually. If one job is started, processes (aRFCs) can be started, e.g. up to the system limit.

The number of computed data objects depends on the granularity of the parallelized process. While building the work packages, the adapter unit chooses the size of the work packages according to a predefined granularity such that during run time all available processors are always executing at least one work package, if procurable. Thereby the processing time can be minimized.

In a further embodiment of the method according to the present invention it is possible that the user defines during system implementation a number of functional modules with respect to specific processes. This can be done within the parallel processing framework. The respective functional module is executed automatically by the adapter unit if the specific process is activated. Such a functional module may consist of building/ordering rules used by the parallel processing framework for the building/ordering of the work packages. Those functional modules may be called by aRFCs. The workload may involve an arbitrary number of such functional modules.

The present invention further refers to a computer system for dynamic parallel processing of a plurality of subprocesses of a process, each of the plurality of subprocesses including processing of one or more data objects. The computer system comprises a computing unit and a plurality of servers for processing the plurality of data objects by the plurality of subprocesses. The computing unit provides a parallel processing framework. Furthermore, the computer system comprises an adapter unit interconnecting the computing unit and the plurality of servers, the adapter unit being arranged and constructed to automatically build according to rules predefinable by means of the parallel processing framework, work packages of the plurality of data objects such that the work packages can be executed in a semantically arbitrary order, and to dynamically distribute work packages of the plurality of data objects among the plurality of servers according to a process specific execution order definable by means of the parallel processing framework.

In an embodiment of the computer system the work packages are distributed automatically according to a process specific execution order predefined by a user. That means that the work packages whose individual size can be influenced by the adapter unit according to rules given by the user with respect to a specific process are dynamically distributed among the servers by additionally taking into account that the overall processor load of each server is well-balanced among the servers.

It is possible that the work package comprises one or more blocks, each block having a specific size.

According to another embodiment of the computer system according to the present invention each work package is processed on a server via an asynchronous so-called remote function call (aRFC). The number of parallel running subprocesses depends on the configuration and the current load of the system. Normally, it can be significantly higher than the number of parallel jobs which have been distributed manually. If one job is started, processes (aRFCs) can be started, e.g. up to the system limit.

The present invention also refers to a computer implemented framework for dynamic parallel processing of a plurality of subprocesses of a process, each of the plurality of subprocesses including processing of one or more data objects in a computer system comprising a plurality of servers for processing the plurality of data objects by the plurality of subprocesses. The framework comprises means for defining schemes for building work packages from the plurality of data objects, a scheme being specific for a process type, and means for defining an execution order for dynamically distributing the work packages among the plurality of servers, an execution order being specific for a process type.

It is possible that the computer implemented framework comprises a display for dynamically showing the status of the process during processing.

Furthermore, the computer implemented framework can comprise means for defining functional modules substituting a process specific scheme and a process specific execution order when being executed.

Also covered by the present disclosure is a computer program with a program code which is suitable for carrying out a method according to the invention as described above when the computer program is run on a computer. The computer program itself as well as the program code stored on a computer-readable medium is also covered.

Further features and embodiments of the invention will become apparent from the description and the accompanying drawings.

It will be understood that the features mentioned above and those described hereinafter can be used not only in the combination specified but also in other combinations or on their own, without departing from the scope of the present invention.

The invention is schematically illustrated in the drawings by way of an example embodiment and is explained in detail with reference to the drawings. It is understood that the description is in no way limiting on the scope of the present invention and is merely an illustration of a preferred embodiment of the invention.

### Brief description of the Drawings

In the drawings,
Figure 1 is a schematic view of a possible course of an embodiment of the method according to the present invention;
Figure 2 is a schematic view of a possible configuration of an embodiment of a computer system according to the present invention;
Figure 3 shows a flowchart of a further embodiment of the method according to the present invention; and
Figure 4 depicts an optimal distribution of work packages among a number of servers.

### Detailed Description

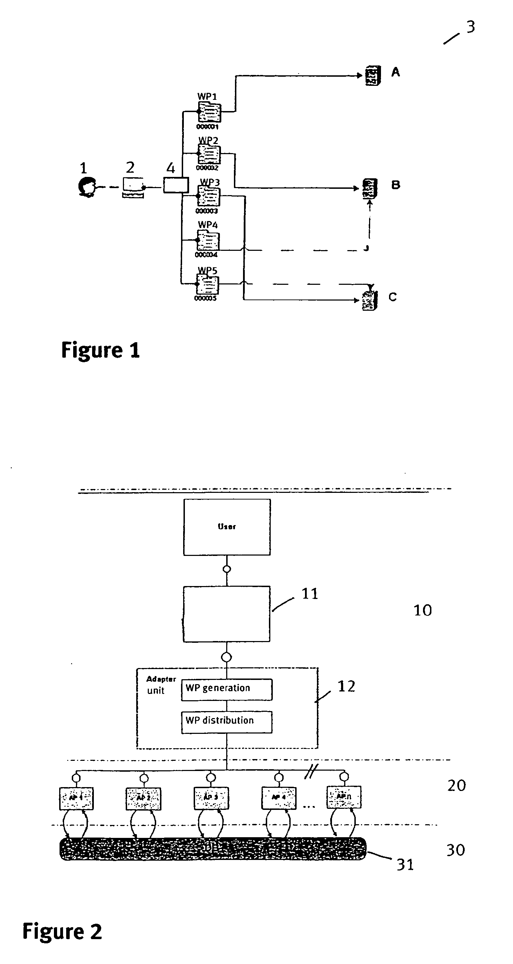

Figure 1 shows a user 1 who wants to start a process via a computing unit 2. The computing unit 2 is part of a computer system 3. The computer system 3 further comprises a plurality of servers, in this example three servers A, B and C. The user 1 wants to start a process which has to be done with the help of the computer system 3. Many processes have to be done very quickly in times of low use of the computer system capacity e.g. at night. Therefore, processes should be accelerated as much as possible to be done before the load of the computer system rises again. For that reason optimisation of complex processes will have a huge impact on system performance and availability. The process which is started now by the user 1 via the computing unit 2 comprises processing of a plurality of data objects. The computing unit 2 puts a parallel processing framework at the user's disposal. This framework provides the user 1 with a logical structure for classifying and organizing process specific components which can be determined and inserted by the user 1 in appropriate data fields or tables, thus generating a process specific scheme. The framework can contain specialized APIs (Application Program Interfaces), services and tools, which reduce the knowledge the user 1 needs to start the process. The framework corresponds to a broad overview, outline or skeleton, within which details relating to the process to be executed can be added. In a first step an adapter unit 4 generates according to that process specific scheme five work packages WP1 to WP5 which are based on the plurality of data objects. Each work package has a certain size. The sum of the number of work packages multiplied by their respective size results in the total workload. In a next step the work packages WP1 to WP5 are distributed by the adapter unit 4 among the available servers A, B and C. The execution order of the work packages can generally also be determined by the user 1. As shown in figure 1, WP1 is sent to server A, WP2 is sent to server B and WP3 is sent to server C. As soon as one of those distributed work packages WP1 to WP3 is finished, the next work package can be started at once. In this case, as indicated by dotted lines, server B is available after having processed the second work package WP2 and before server A has processed the first work package WP1. For this reason server B continues immediately to process the fourth work package WP4. The fifth work package WP5 is processed by server C, because server A is still not finished with the first work package WP1. As a result of this dynamical distribution of the work packages, the processing can be optimised in time. Needless to say that more than one work package can be sent to one server if enough resources are available.

Figure 2 shows a possible structure of a computer system for dynamic parallel processing of a plurality of subprocesses of a process, each of the plurality of subprocesses including processing of one or more data objects. The embodiment shown is divided into three different levels. Within the control level 10 a computing unit 11 and an adapter unit 12 are arranged. In a second level 20 beneath the control level 10, a plurality of servers AP1 to APn is arranged for processing (e.g. server group). A third level 30 comprises a data base 31. The adapter unit 12 interconnects the computing unit 11 with the plurality of servers AP1 to APn. The computing unit 11 provides a parallel processing framework with means to compose rules for building and for distributing work packages of the plurality of data objects, thus defining a process specific scheme and a process specific execution order, the parallel processing framework further providing a display for dynamically showing the status of the process during processing.

The adapter unit 12 is arranged and constructed to generate the work packages (WP generation) of the plurality of data objects which have to be processed by the plurality of subprocesses running in parallel. After having generated the appropriate work packages with respect to the process specific scheme defined by means of the framework, those work packages are distributed (WP distribution) by the adapter unit 12 among the plurality of servers AP1 to APn. This distribution is made in a dynamic manner while the execution order of the work packages is generally determined by the user with help of the framework. Adapter unit 12 comprises two main functions. The first is to build the work packages and to set the order of the work packages for a certain process according to a user defined scheme. The second function is starting, for every work package, an individual subprocess on any server of the plurality of servers AP1 to APn. Thus, there are n subprocesses started in parallel.

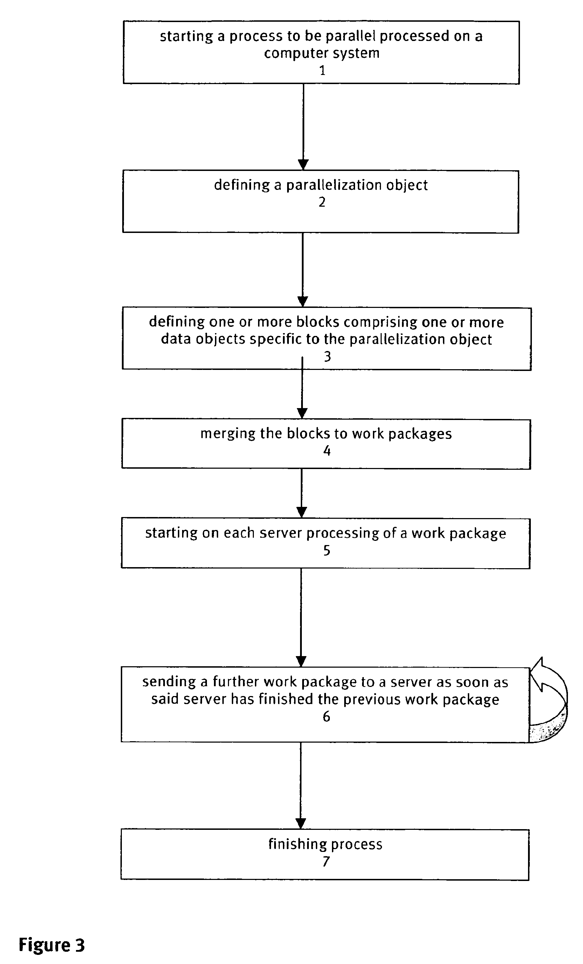

Figure 3 shows a flowchart of a further embodiment of the claimed method. In step 1 a user starts a process which includes processing of a plurality of data objects on a computer system. The computer system comprises a plurality of servers, each having at least one processor, and an adapter unit. The computer system further provides a parallel processing framework which includes a structured collection of all components which relate and apply to the process. The user fixes the different required components, thus defining process specific parameters. The process should be processed with respect to the process specific parameters within best time. In step 2 the process is analysed by the adapter unit. The adapter unit defines a parallelization object. In case of a commission process, those objects of parallelization can correspond to commission contracts. In step 3 one or more blocks are defined. Each block comprises one or more data objects specific to the parallelization object. In step 4 several blocks are merged to one work package. The generating of the blocks and the succeeding creation of work packages is performed with respect to the predefined process specific parameters as determined by the user by means of the parallel processing framework. Commission contracts with equal or similar conditions or properties can be combined to one block or at least within one work package. Therefore, a rough order of the work packages is established. In step 5 the adapter unit starts on each server the processing of a work package in form of a so-called job. As soon as one of the plurality of servers has finished a work package, which can be indicated for example by a so-called COMMIT, a further work package is sent to that server as indicated by step 6. This procedure continues until all work packages are processed by any one of the plurality of servers as indicated by a backward arrow. Therefore, the complete workload, consisting of the generated plurality of work packages is going to be distributed dynamically to several subprocesses. The processing of the work packages on different servers can be done in a semantically arbitrary order which has to be ensured by the predefined process specific parameters. A process specific order is already taken into account when generating the blocks and the work packages (step 3 and step 4). When all work packages are processed, the process is finished in step 7.

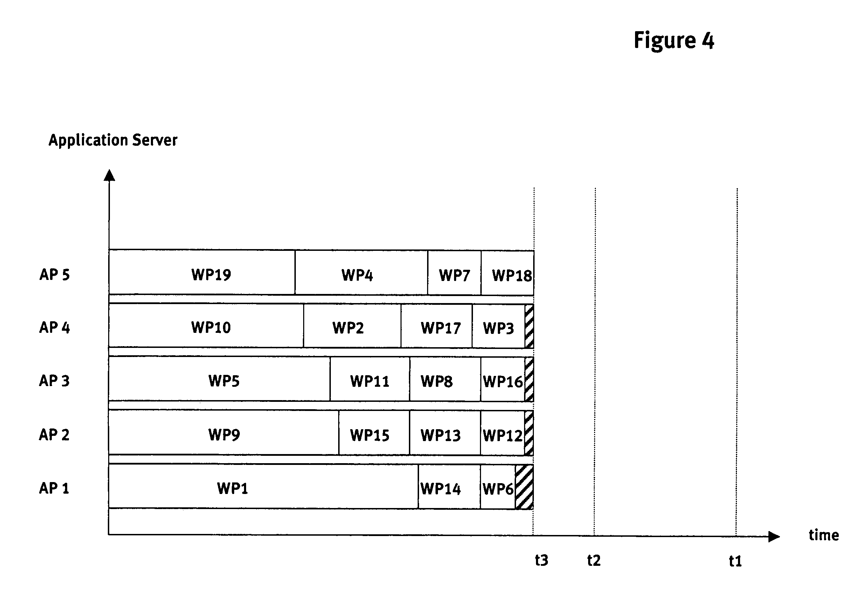

Figure 4 depicts an optimal distribution of work packages WP among a number of servers. In the example shown five application servers AP1 to AP5 are available. In the example shown, 19 work packages are generated. However, the same procedure described in the following also applies to any finite number of work packages and any finite number of servers. From the totally 19 work packages WP1 to WP19 the adapter unit chooses according to the size of the work packages the largest five WPs to be sent to the APs, i.e. WP1, WP9, WP5, WP10 and WP19 (in descending order). The smallest WP among these five WPs, namely WP19, which is processed by AP5, is finished first. Then the next WP in size, namely WP4 is sent to AP5. From the figure it is understood that the minimal possible computing time of the longest subprocess which can be achieved corresponds to the computing time for the largest WP in case that after finishing the largest work package no further work packages would be left for computation. However, in the present example after AP1 has finished WP1 there are still work packages left for computation and WP14 is sent to AP1. Finally, the last five WPs are sent to the APs and one after the other of the APs finishes 'his' WP. The process ends with the last AP (AP5) finishing WP18 defining the process time t3. The time of the other APs being idle due to the waiting for AP5 finishing WP18 is minimized (fasciated areas). This minimization is achieved by ordering the WPs according to descending size and sending them dynamically to the available servers. The dotted lines on the right show the process time if this minimization would not be performed: t1 would be the process time if the WP would be sent just by increasing index number, i.e. WP1, WP2, WP3, WP4 to AP1, WP5, WP6, WP7, WP8 to AP2, and so on. t2 would be the process time if the WPs are dynamically distributed on the APs but without changing the order of the index, i.e. an AP gets the next WP in the index list as soon as that AP has finished one: WP1 to AP1, WP2 to AP2, WP3 to AP3, WP4 to AP4, WP5 to AP5, WP6 to the first of the APs which has finished his first WP, WP7 to the second APs which has finished his first WP, and so on.

Referring to the example of accounting commission contracts as a process to be executed a display generated by an already mentioned parallel processing framework could depict the segmentation of the workload by indicating a table as shown in table 1. The overall workload corresponds to the entirety of the commission contracts. A user wishing to start the process of accounting the commission contracts is called to insert appropriate data into the table. In the first column of table 1 an identification number of a work package to be built has to be inserted. In second and third columns an interval of commission contracts which should be merged in one work package can be determined. The second column contains the registration number of the contract forming the lower interval limit, and the third column shows the registration number of the contract forming the upper limit of the respective interval. That means that the contracts having a registration number within the interval from 1 to 10000 are all merged within work package 1, while the contracts having a registration number within the interval from 10001 to 11000 are combined within work package 2.

**Table I: An example for a workload segmentation into work packages for the process regarding accounting commission contracts with respect to the contract registration number.**

| Work package | Lower contract registration number | Upper contract registration number |
|---|---|---|
| 1 | 1 | 10000 |
| 2 | 10001 | 11000 |
| ... | ... | ... |

Alternatively, it is possible that the framework provides a table by means of which it is possible to segment the workload with respect to the identity of different customers (see table II), including the use of generally known wildcards. Therefore, a user wishing to start the process can insert appropriate data within corresponding data fields or table columns, respectively. In the example shown by table II the user defines that a work package should comprise all contracts relating to one customer. Therefore, work package 1 is built by merging all contracts relating to customer A, work package 2 will comprise all contracts relating to customer W and so on. In work package 5 contracts of customers, the identity of which starts with strings from "CA" to "CO" are selected, thereby applying alphabetic order rules. Accordingly, in work package 6 contracts of customers are selected, the identity of which starts with a string from "E" to "G".

**Table II: Example for workload segmentation into work packages for the process regarding accounting contracts with respect to the names of the customers.**

| Work package | Starting identity of customer | Ending identity of customer |
|---|---|---|
| 1 | A | A |
| 2 | W | W |
| 3 | B | B |
| 4 | XY-Company | XY-Company |
| 5 | CA* | CO* |
| 6 | E* | G* |
| ... | ... | .... |

As seen from table I and II the segmentation of any workload into work packages can differ regarding the character of the process. The segmentation is defined by the user. The order of the execution of the work packages depends on the order defined in rules which are generally also given by the user.

## Claims

1. A method for dynamic parallel processing of a plurality of subprocesses of a process initiated by means of a parallel processing framework, each of the plurality of subprocesses including processing of one or more data objects in a computer system comprising a plurality of servers (AP1, ..., APn) for processing the plurality of data objects by the plurality of subprocesses; the method comprising:
- building work packages (WP1, ..., WPn) from the plurality of data objects according to a process specific scheme, and
- dynamically distributing the work packages among the plurality of servers (AP1, ..., APn) according to a process specific execution order.

2. The method according to claim 1, wherein the scheme is defined by means of the framework, such that the work packages can be executed in a semantically arbitrary order.

3. The method according to claim 1 or 2, wherein the execution order is defined by means of the framework.

4. The method according to any one of claims 1 to 3, wherein the process specific scheme accounts for blocking rules relating to the plurality of data objects, the blockings being activated with begin of the corresponding process.

5. The method according to any one of the preceding claims, further comprising the step of providing the parallel processing framework with means to compose rules for building and for distributing the work packages, thus defining the process specific scheme and the process specific execution order, the parallel processing framework further providing a display for dynamically showing the status of the process during processing.

6. The method according to any one of the preceding claims, wherein each work package (WP1, ..., WPn) is built up of one or more blocks, each block having a specific size.

7. The method according to any one of the preceding claims, wherein the work packages (WP1, ..., WPn) are distributed among the plurality of servers (AP1, ..., APn) such that the processing time is minimized.

8. The method according to any one of the preceding claims, wherein the work packages (WP1, ..., WP19) are commit controlled.

9. The method according to any one of the preceding claims, wherein each work package (WP1, ..., WPn) is processed on a server (AP1, ..., APn) via an asynchronous remote function call (aRFC).

10. The method according to any one of the preceding claims, wherein each work package (WP1, ..., WPn) is processed according to a predefined granularity.

11. The method according to any one of the preceding claims, wherein the process specific scheme to build the work packages (WP1, ..., WPn) and the process specific execution order of the work packages (WP1, ..., WPn) are substituted by functional modules to be executed.

12. A computer system for dynamic parallel processing of a plurality of subprocesses of a process, each of the plurality of subprocesses including processing of one or more data objects, comprising
a computing unit (2, 11) providing a parallel processing framework;
a plurality of servers (AP1, ..., APn) for processing the plurality of data objects by the plurality of subprocesses; and
further comprising an adapter unit (4, 12) interconnecting the computing unit (2, 11) and the plurality of servers (AP1, ..., APn), the adapter unit (4, 12) being arranged and constructed to automatically build, according to predefinable rules, work packages (WP1, ..., WPn) of the plurality of data objects, and to dynamically distribute the work packages (WP1, ..., WPn) of the plurality of data objects among the plurality of servers (AP1, ..., APn) according to a process specific execution order.

13. A computer system according to claim 12, wherein the rules are predefinable by means of the parallel processing framework, such that the work packages (WP1, ..., WPn) can be executed in a semantically arbitrary order.

14. A computer system according to claim 12 or 13, wherein the process specific execution order can be defined by means of the parallel processing framework.

15. The computer system according to claim 12, 13 or 14, wherein the adapter unit (4, 12) is chosen as a process specific adapter unit.

16. The computer system according to claim 12 to 15, wherein the work packages (WP1, ..., WPn) can be distributed automatically according to a process specific execution order predefined by means of the parallel processing framework.

17. The computer system according to any one of the claims 12 to 16, wherein each work package (WP1, ..., WPn) comprises one or more blocks, each block having a specific size.

18. The computer system according to any one of claims 12 to 17, wherein the work packages (WP1, ..., WPn) can be commit controlled.

19. The computer system according to claim 18, wherein one or more of the work packages are divided into one or more commit blocks.

20. The computer system according to any one of claims 12 to 19, wherein each work package (WP1, ..., WPn) can be processed on a server via an asynchronous remote function call (aRFC).

21. A computer program with program code which is suitable for carrying out a method according to any one of claims 1 to 11 when the computer program is run on a computer.

22. A computer-readable medium with a computer program stored thereon, the computer program comprising a program code which is suitable for carrying out a method according to any one of claims 1 to 11 when the computer program is run on a computer.

23. A computer program product with a computer-readable medium according to claim 22.

24. A computer implemented framework for dynamic parallel processing of a plurality of subprocesses of a process, each of the plurality of subprocesses including processing of one or more data objects in a computer system comprising a plurality of servers (AP1, ..., APn) for processing the plurality of data objects by the plurality of subprocesses; the framework comprising:
- means for defining schemes for building work packages (WP1, ..., WPn) from the plurality of data objects, a scheme being specific for a process type, and
- means for defining an execution order for dynamically distributing the work packages among the plurality of servers (AP1, ..., APn), an execution order being specific for a process type.

25. The computer implemented framework according to claim 24, further comprising a display for dynamically showing the status of the process during processing.

26. The computer implemented framework according to claim 24 or 25, further comprising means for defining functional modules substituting a process specific scheme and a process specific execution order when being executed.
